# EUROPEAN PATENT APPLICATION

(11) **EP 3 261 046 A1**
(43) Date of publication of application: **27.12.2017**
(21) Application number: 17175626.5
(22) Date of filing: 13.06.2017
(51) Int. Cl.: G06Q 50/00, G06F 17/30, G06K 9/00

(54) **METHOD AND DEVICE FOR IMAGE PROCESSING**

(30) Priority: 23.06.2016 CN 201610466510
(71) Applicant: Beijing Xiaomi Mobile Software Co., Ltd., Beijing 100085 (CN)
(72) Inventor: XIE, Yan, Beijing, Beijing 100085 (CN); CHENG, Yue, Beijing, Beijing 100085 (CN); WEI, Liang, Beijing, Beijing 100085 (CN)
(74) Representative: dompatent von Kreisler Selting Werner - Partnerschaft von Patent- und Rechtsanwälten mbB

(57) **Abstract**

Methods and devices for image processing are provided in the disclosure, which belongs to Internet technology field. A method for image processing may include: receiving (201) a target image transmitted from a terminal, the target image including an image of person; acquiring (202) a similar image of the target image from a plurality of images stored in a library, wherein the plurality of images are images having corresponding contact information; transmitting (203) the similar image and the contact information corresponding to the similar image to the terminal, such that the terminal is enabled to a recommendation message based on the similar image and the contact information. In the present disclosure, since the target image can be flexibly acquired by the terminal and the similar image is obtained based on the target image, the flexibility of the similar image can be ensured.

## Description

### FIELD

The present disclosure generally relates to Internet technologies, and more particularly, to methods and devices for image processing.

### BACKGROUND

With the development of Internet technologies, more and more people are communicating and exchange messages with a social network application (App), which may be installed on a terminal. This social network application may be used to facilitate a communication between a user of the terminal and an object existed within a contact list of this user. In order to realize such a communication, the user may be required to firstly add this object into the contact list. When adding a contact object, the terminal may generate a recommendation message in order to recommend to the user one or more objects that are available for adding into the contact list.

Currently, a message generation method may be presented as: a server acquires a contact relation map through social relation chains among users (i.e., contact relation chains); after that, the server analyzes potential associations among the users according to the structure of this contact relation map; for a particular user, the server may send account information of another user which has a potential association with this particular user to a terminal of this user, such that the terminal may generate a recommendation message based on that account information only.

### SUMMARY

In view of the fact in related art, methods and devices for image processing are provided in the disclosure.

According to a first aspect of the present disclosure, there is provided a method for image processing, the method including: receiving a target image transmitted from a terminal, the target image including an image of a person; acquiring one or more similar images of the target image from a plurality of images stored in a library, wherein the plurality of images are images having corresponding contact information; transmitting the one or more similar images and the contact information corresponding to the one or more similar images to the terminal, such that the terminal is enabled to store, display and/or process further the similar images and the contact information. In particular, the terminal is enabled as processing further to generate a recommendation message based on the similar image and the contact information in order to recommend an object that is available to contact for the user. Thereby, the recommendation message may include the at least one similar image and the contact information corresponding to the similar image.

Alternatively or additionally, the step of acquiring a similar image of the target image from a plurality of images stored in a library may further include: for each image within the plurality of images, determining a person similarity between the image and the target image, and determining the image as the similar image of the target image, in case that the person similarity is larger than or equal to a predefined similarity.

Alternatively or additionally, the step of determining a person similarity between the image and the target image may include: determining a face similarity between the image and the target image; and determining the face similarity as the person similarity.

Alternatively or additionally, the step of determining a person similarity between the image and the target image may include: determining at least one similarity based on the image and the target image, wherein the at least one similarity includes a face similarity, a posture similarity, and a clothing similarity; and taking a weighted average for the at least one similarity based on a weight of each similarity within the at least one similarity, so as to obtain the person similarity between the image and the target image.

Alternatively or additionally, before acquiring a similar image of the target image from a plurality of images stored in a library, the method may further include: deciding whether an image has corresponding contact information, upon receipt of the image; and storing the image and the contact information corresponding to the image into the library, in case that the image has corresponding contact information.

Alternatively or additionally, after deciding whether an image has corresponding contact information upon receipt of the image, the method may further include: for each of a plurality of contact images, comparing the image with each contact image, in case that the image does not have corresponding contact information, wherein the plurality of contact images are contact images in a stored address book; determining contact information corresponding to an contact image as the contact information of the image, in case that the image successfully matches the contact image; and storing the image and the contact information corresponding to the image into the library. Thereby, contact images are those images which are stored in the address book of a terminal to provide a visual information of the contact person in the address book.

According to a second aspect of the present disclosure, there is provided a method for message generation, the method including: acquiring a target image that includes an image of a person; transmitting the target image to a server, such that the server is enabled to return one or more similar images of the target image and contact information corresponding to the one or more similar images based on the target image; and storing, displaying and/or further processing of the one or more similar images and the contact information corresponding to the one or more similar images, upon receipt of the one or more similar images and the contact information transmitted by the server. In particular, the terminal is enabled as processing further to generate a recommendation message based on the similar image and the contact information in order to recommend an object that is available to contact for the user. Thereby, the recommendation message may include the at least one similar image and the contact information corresponding to the similar image.

Alternatively or additionally, the step of acquiring the target image may include: screen-capturing a region within a shot frame where the image of person is located, upon detection of the image of person within the shot frame during a shooting process, so as to obtain the target image.

In an alternative embodiment, the step of acquiring the target image may include: screen-capturing a region within a shot frame where the image of person is located, upon detection of the image of person within the shot frame and detection of a selection instruction for the image of person during a shooting process, so as to obtain the target image.

Alternatively or additionally, after the step of generating a recommendation message based on the similar image and the contact information corresponding to the similar image, the method may further include: in case that the contact information corresponding to the similar image includes a target account, transmitting a contact adding request to the target account, wherein the target account is an account belonging to a same account system as a user account that is currently logged on in the terminal.

According to a third aspect of the present disclosure, there is provided a device for message generation, the device including: a reception module configured to receive a target image transmitted from a terminal, the target image including an image of a person; an acquisition module configured to acquire one or more similar images of the target image from a plurality of images stored in a library, wherein the plurality of images are images having corresponding contact information; and a transmission module configured to transmit the one or more similar images and the contact information corresponding to the one or more similar images to the terminal, such that the terminal is enabled to store, display and/or process further the one or more similar images and the contact information. In particular, the terminal is enabled as processing further to generate a recommendation message based on the similar image and the contact information in order to recommend an object that is available to contact for the user. Thereby, the recommendation message may include the at least one similar image and the contact information corresponding to the similar image.

Alternatively or additionally, the acquisition module may include: a first determination unit configured to, for each image within the plurality of images, determine a person similarity between the image and the target image; and a second determination unit configured to determine, for each image within the plurality of images, the image as the similar image of the target image, in case that the person similarity is larger than or equal to a predefined similarity.

Alternatively or additionally, the first determination unit may include: a first determination sub-unit configured to, for each image within the plurality of images, determine a face similarity between the image and the target image; and a second determination sub-unit configured to determine the face similarity as the person similarity.

In an alternative embodiment, the first determination unit may include: a third determination sub-unit configured to, for each image within the plurality of images, determine at least one similarity based on the image and the target image, wherein the at least one similarity includes a face similarity, a posture similarity, and a clothing similarity; and a weighted average sub-unit configured to take a weighted average for the at least one similarity based on a weight of each similarity within the at least one similarity, so as to obtain the person similarity between the image and the target image.

Alternatively or additionally, the device may further include: a decision module configured to decide whether an image has corresponding contact information, upon receipt of the image; and a first storage module configured to store the image and the contact information corresponding to the image into the library, in case that the image has corresponding contact information.

Alternatively or additionally, the device may further include: a matching module configured to, for each of a plurality of contact images, match the image with each contact image, in case that the image does not have corresponding contact information, wherein the plurality of contact images are contact images in a stored address book; a determination module configured to determine contact information corresponding to an contact image as the contact information of the image, in case that the image successfully matches the contact image; and a second storage module configured to store the image and the contact information corresponding to the image into the library. Thereby, contact images are those images which are stored in the address book of a terminal to provide a visual information of the contact person in the address book.

According to a fourth aspect of the present disclosure, there is provided a device for message generation, the device including: an acquisition module configured to acquire a target image that includes an image of a person; a first transmission module configured to transmit the target image to a server, such that the server is enabled to return one or more similar images of the target image and contact information corresponding to the one or more similar images based on the target image; and a generation module configured to store, display and/or process further the one or more similar images of the target image and the contact information corresponding to the one or more similar images, upon receipt of the one or more similar images and the contact information transmitted by the server. In particular, the terminal is enabled as processing further to generate a recommendation message based on the similar image and the contact information in order to recommend an object that is available to contact for the user. Thereby, the recommendation message may include the at least one similar image and the contact information corresponding to the similar image.

Alternatively or additionally, the acquisition module may include a first screen-capturing unit configured to screen-capture a region within a shot frame where the image of person is located, upon detection of the image of person within the shot frame during a shooting process, so as to obtain the target image.

In an alternative embodiment, the acquisition module may include a second screen-capturing unit configured to screen-capture a region within a shot frame where the image of person is located, upon detection of the image of person within the shot frame and detection of a selection instruction for the image of person during a shooting process, so as to obtain the target image.

Alternatively or additionally, the device may further include a second transmission module configured to, in case that the contact information corresponding to the similar image includes a target account, transmitting a contact adding request to the target account, wherein the target account is an account belonging to a same account system as a user account that is currently logged on in the terminal.

According to a fifth aspect of the present disclosure, there is provided a device for message generation, the device including: a processor; and a memory for storing instructions executable by the processor. In an embodiment, the processor may be configured to: receive a target image transmitted from a terminal, the target image including an image of a person; acquire one or more similar images of the target image from a plurality of images stored in a library, wherein the plurality of images are images having corresponding contact information; and transmit the one or more similar images and the contact information corresponding to the one or more similar images to the terminal, such that the terminal is enabled to store, display and/or profess further the one or more similar images and the contact information. In particular, the terminal is enabled as processing further to generate a recommendation message based on the similar image and the contact information in order to recommend an object that is available to contact for the user. Thereby, the recommendation message may include the at least one similar image and the contact information corresponding to the similar image.

According to a sixth aspect of the present disclosure, there is provided a device for message generation, the device including: a processor; and a memory for storing instructions executable by the processor. In an embodiment, the processor may be configured to: acquire a target image that includes an image of a person; transmit the target image to a server, such that the server is enabled to return one or more similar images of the target image and contact information corresponding to the one or more similar images based on the target image; and storing, displaying and/or processing further the one or more similar images of the target image and the contact information corresponding to the one or more similar images, upon receipt of the one or more similar images and the contact information transmitted by the server. In particular, the terminal is enabled as processing further to generate a recommendation message based on the similar image and the contact information in order to recommend an object that is available to contact for the user. Thereby, the recommendation message may include the at least one similar image and the contact information corresponding to the similar image.

Embodiments of the disclosure may provide at least some of the following beneficial effects. In the embodiments of the present disclosure, a server receives a target image transmitted from a terminal and acquires one or more similar images of the target image from a plurality of images stored in a library. After that, the server transmitting the one or more similar images and the contact information corresponding to the one or more similar images to the terminal, such that the terminal is enabled to a recommendation message based on the one or more similar images and the contact information. Since the target image can be flexibly acquired by the terminal and the one or more similar images is obtained based on the target image, the flexibility of the one or more similar images can be ensured. Meanwhile, the recommendation message is generated based on this similar image, therefore the terminal's flexibility for generating a recommendation message can be improved accordingly. Further, the means for executing the image recognition and comparison of the target image with the stored image of the library in order to acquire the one or more similar images is located in the server. Thus, computational requirements in the terminal can be limited and technical effort of the terminal can be reduced. Thus, it is possible to implement in the server adapted hardware and/or adapted computational systems for image recognition to further enhance the efficiency of the process of image recognition with respect to speed and reliability.

It is to be understood that both the forgoing general description and the following detailed description are exemplary only, and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram of an implementing environment relevant to a method for message generation according to an exemplary embodiment;
Fig. 2 is a flow chart of a method for message generation according to an exemplary embodiment;
Fig. 3 is a flow chart of another method for message generation according to an exemplary embodiment;
Fig. 4A is a flow chart of yet another method for message generation according to an exemplary embodiment;
Fig. 4B is a schematic diagram of a shot frame according to an exemplary embodiment;
Fig. 4C is a schematic diagram of a recommendation message according to an exemplary embodiment;
Fig. 5A is a block diagram of a device for message generation according to an exemplary embodiment;
Fig. 5B is a block diagram of an acquisition module according to an exemplary embodiment;
Fig. 5C is a block diagram of a first determination unit according to an exemplary embodiment;
Fig. 5D is a block diagram of another first determination unit according to an exemplary embodiment;
Fig. 5E is a block diagram of another device for message generation according to an exemplary embodiment;
Fig. 5F is a block diagram of another device for message generation according to an exemplary embodiment;
Fig. 6A is a block diagram of another device for message generation according to an exemplary embodiment;
Fig. 6B is a block diagram of another device for message generation according to an exemplary embodiment;
Fig. 7 is a block diagram of another device for message generation according to an exemplary embodiment;
Fig. 8 is a block diagram of another device for message generation according to an exemplary embodiment.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of devices and methods consistent with aspects related to the invention as recited in the appended claims.

Before the detailed description of embodiments of the present disclosure, the application scenario of the embodiments of the present disclosure will be introduced firstly. With the development of Internet technologies, a user frequently communicates with an object existed within a contact list of this user with the use of a social network application (App), which may be installed on a terminal. In related art, a server may analyze potential associations among users based on social relation chains between users (i.e., contact relation chains). For a particular user, the server may send account information of other users which have potential associations with this particular user to a terminal of this user, such that the terminal may generate a recommendation message based on those account information. At this time, the recommendation message is generated merely based on those account information of other users which have potential associations with this particular user, and the approach of the generation is simple and short of flexibility. Thus, the embodiments of the present disclosure provide a message generation method to improve a terminal's flexibility for generating a recommendation message.

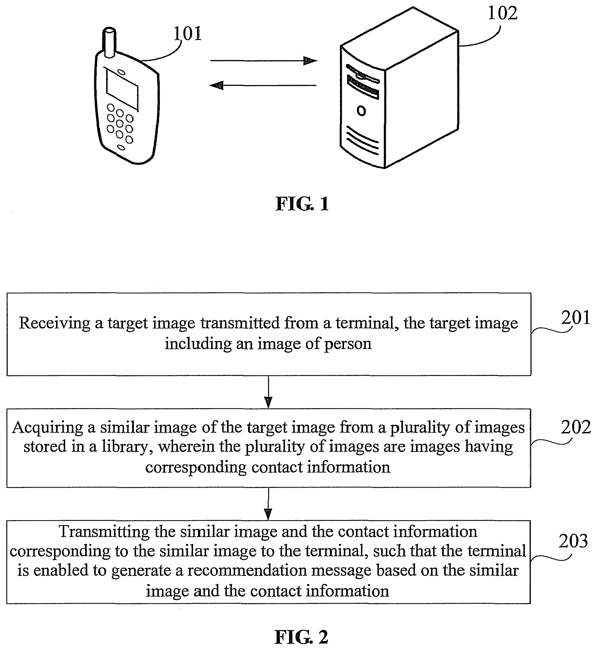

Fig. 1 is a schematic diagram of an implementing environment relevant to a method for message generation according to an exemplary embodiment. As shown in Fig. 1, the implementing environment may include a terminal 101 and a server 102. Specifically, the terminal 101 may be a mobile phone, a computer, a tablet device, etc., the server 102 may be a single server, or a server cluster combined of a plurality of servers, and the terminal 101 and the server 102 may be communicated via a wired or wireless connection. The terminal 101 may acquire a target image and transmit the target image to the server 102. Upon receiving this target image, the server 102 may acquire a similar image of the target image and transmit the similar image and contact information corresponding to the similar image to the terminal 101. When the similar image and contact information corresponding to the similar image are received, the terminal 101 may store, display and/or process further the similar image and the contact information corresponding to the similar image. In particular, the terminal is enabled as processing further to generate a recommendation message based on the similar image and the contact information in order to recommend an object that is available to contact for the user. Thereby, the recommendation message may include the at least one similar image and the contact information corresponding to the similar image.

Fig. 2 is a flow chart of a method for message generation according to an exemplary embodiment. This method for message generation is applied in a server. As shown in Fig. 2, the method includes following steps.

In step 201, a target image transmitted from a terminal is received, and the target image includes an image of a person.

In step 202, a similar image of the target image is acquired from a plurality of images stored in a library, wherein the plurality of images are images having corresponding contact information.

In step 203, the similar image and the contact information corresponding to the similar image are transmitted to the terminal, such that the terminal is enabled to generate a recommendation message based on the similar image and the contact information.

In this embodiment of the present disclosure, a server receives a target image transmitted from a terminal and acquires a similar image of the target image from a plurality of images stored in a library. After that, the server transmitting the similar image and the contact information corresponding to the similar image to the terminal, such that the terminal is enabled to generate a recommendation message based on the similar image and the contact information. Since the target image can be flexibly acquired by the terminal and the similar image is obtained based on the target image, the flexibility of the similar image can be ensured. Meanwhile, the recommendation message is generated based on this similar image, therefore the terminal's flexibility for generating a recommendation message can be improved accordingly.

Alternatively or additionally, the step 202 may further include: for each image within the plurality of images, determining a person similarity between the image and the target image, and determining the image as the similar image of the target image, in case that the person similarity is larger than or equal to a predefined similarity.

Alternatively or additionally, the step of determining a person similarity between the image and the target image may include: determining a face similarity between the image and the target image; and determining the face similarity as the person similarity.

Alternatively or additionally, the step of determining a person similarity between the image and the target image may include: determining at least one similarity based on the image and the target image, wherein the at least one similarity includes a face similarity, a posture similarity, and a clothing similarity; and taking a weighted average for the at least one similarity based on a weight of each similarity within the at least one similarity, so as to obtain the person similarity between the image and the target image.

Alternatively or additionally, before step 202 of acquiring a similar image of the target image from a plurality of images stored in a library, the method may further include: deciding whether an image has corresponding contact information, upon receipt of the image; and storing the image and the contact information corresponding to the image into the library, in case that the image has corresponding contact information.

Alternatively or additionally, after deciding whether an image has corresponding contact information upon receipt of the image, the method may further include: for each of a plurality of contact images, comparing the image with each contact image, in case that the image does not have corresponding contact information, wherein the plurality of contact images are contact images in a stored address book; determining contact information corresponding to an contact image as the contact information of the image, in case that the image successfully matches the contact image; and storing the image and the contact information corresponding to the image into the library. Thereby, contact images are those images which are stored in the address book of a terminal to provide a visual information of the contact person in the address book.

All the alternative or additional technical solutions may be combined arbitrarily to form optional embodiments of the present disclosure. The combinations of these technical solutions or embodiments will be illustrated for brevity purpose.

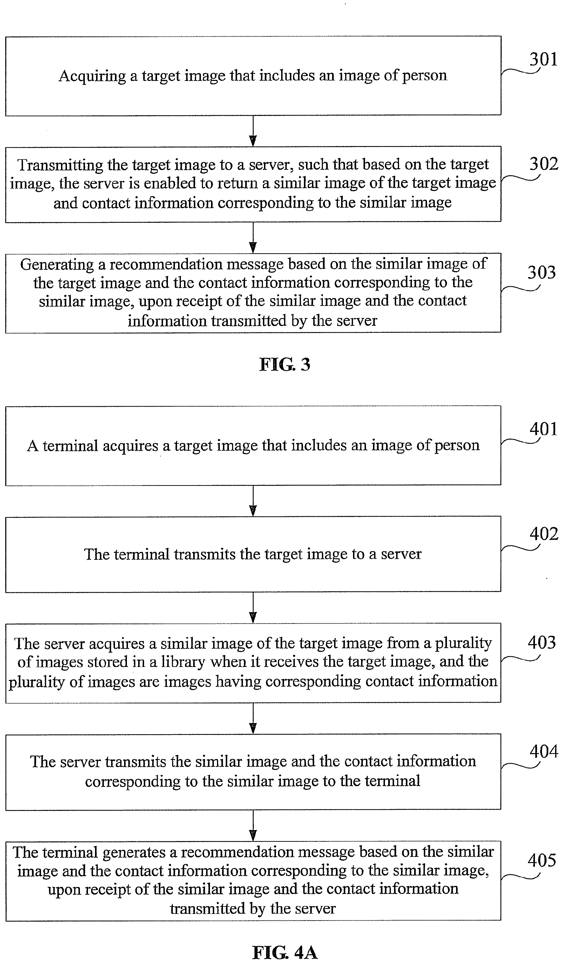

Fig. 3 is a flow chart of a method for message generation according to an exemplary embodiment. The method shown in Fig. 3 may be applied in a terminal. As shown in Fig. 3, the method may include the following steps.

In step 301, a target image that includes an image of a person is acquired.

In step 302, the target image is transmitted to a server, such that the server is enabled to return a similar image of the target image and contact information corresponding to the similar image based on the target image.

In step 303, a recommendation message is generated based on the similar image of the target image and the contact information corresponding to the similar image, upon receipt of the similar image and the contact information transmitted by the server.

In this embodiment of the present disclosure, a terminal acquires a target image and transmits the target image to a server, such that the server is enabled to return a similar image of the target image and contact information corresponding to the similar image based on the target image.

Upon receipt of the similar image and the contact information transmitted by the server, the terminal may generate a recommendation message based on the similar image of the target image and the contact information corresponding to the similar image. Since the target image can be flexibly acquired by the terminal and the similar image is obtained based on the target image, the flexibility of the similar image can be ensured. Meanwhile, the recommendation message is generated based on this similar image. Therefore the terminal's flexibility for generating a recommendation message can be improved accordingly.

Sometimes, the server may generate the recommendation message after receiving the target image from the terminal. For example, the server may receive the target image from the terminal, and search an image library to find and determine one or more similar images that are similar to the received target image, and the server may further find and determine the contact information for the one or more similar images and generate one or more recommendation messages based on the one or more similar images and associated contact information. The server may send the one or more recommendation messages and associated contact information to the terminal.

Alternatively or additionally, the step of 301 may include: screen-capturing a region within a shot frame where the image of person is located, upon detection of the image of person within the shot frame during a shooting process, so as to obtain the target image.

In an alternative embodiment, the step of 301 may include: screen-capturing a region within a shot frame where the image of person is located, upon detection of the image of person within the shot frame and detection of a selection instruction for the image of person during a shooting process, so as to obtain the target image.

Alternatively or additionally, after the step of 303, the method may further include: in case that the contact information corresponding to the similar image includes a target account, transmitting a contact adding request to the target account, wherein the target account is an account belonging to a same account system as a user account that is currently logged on in the terminal.

All the alternative or additional technical solutions may be combined arbitrarily to form optional embodiments of the present disclosure. The combinations of these technical solutions or embodiments will be illustrated for brevity purpose.

Fig. 4A is a flow chart of a method for message generation according to an exemplary embodiment. As shown in Fig. 4A, the method may include the following steps.

In step 401, a terminal acquires a target image that includes an image of person.

Since the target image includes the image of person, when acquiring the target image, the terminal may screen-capture a region within a shot frame where the image of person is located, upon detection of the image of person within the shot frame during a shooting process, so as to obtain the target image. At this time, the terminal is only required to detect whether an image of person appears in the shot frame, without any necessary to perform other tests. Accordingly, the efficiency for acquiring the target image can be improved. Alternatively, during the shooting process, the terminal may screen-capture a region within a shot frame where the image of person is located, when the image of person within the shot frame is detected and also a selection instruction for the image of person is detected, so as to obtain the target image. Usually the selection instruction is triggered by a user of the terminal, thus the captured target image actually is determined through operations of the user, and accordingly it can ensure that the acquired target image can satisfy the user needs. Certainly, in detailed scenarios, the terminal may also acquire the target image by other approaches, and the present disclosure will not be limited thereto.

It is to be noted that the operations about detecting whether an image of person appears in the shot frame by the terminal during the shooting process may be implemented by reference to relevant techniques. The embodiments of the present disclosure will not illustrate in detail regarding this aspect.

Moreover, the selection instruction is used to select the image of person in the shot frame and is triggered by the user. The user may trigger the selection instruction with a specified operation. For example, the specified operation may be a single slick, a double click, a voice operation, and etc., which will not be limited thereto within the embodiments of the present disclosure.

Besides, during the shooting process, the terminal may shoot with a social network application that is currently running. Alternatively, the shoot may be implemented with a camera module within the terminal. The embodiments of the present disclosure will not be limited thereto. In the alternative embodiment, when the terminal shoots with the camera module, the camera module may transfer the acquired target image to the social network application, such that the terminal may subsequently transmit the target image by the use of the social network application.

In an example embodiment, when the terminal screen-captures a region within a shot frame where the image of person is located, a minimum region where the image of person is located can be screen-captured. Of course, in detailed scenarios, the terminal may also screen-captures other regions where the image of person is located. The embodiments of the present disclosure will not be limited thereto.

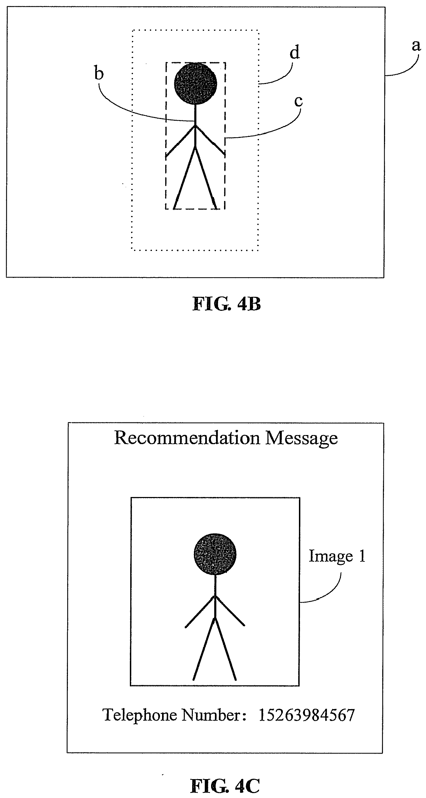

For example, as shown in Fig. 4B, the shot frame is shown as a, and the image of person is shown as b. Therefore, the terminal may screen-capture a minimum region c wherein the image of person is located. Alternatively, the terminal may screen-capture another region d wherein the image of person is located.

In step 402, the terminal transmits the target image to a server.

It is to be noted that the terminal may transmit to the server the target image via a wired or wireless network. The embodiments of the present disclosure will not be limited thereto.

Additionally, the server may be a server associated with the currently running social network application in the terminal.

In step 403, the server acquires a similar image of the target image from a plurality of images stored in a library when it receives the target image. In an embodiment, the plurality of images are images having corresponding contact information.

It is to be noted that the library is used to store images having corresponding contact information. In an embodiment, the contact information may include an Instant Messaging (IM) account, a telephone number, and etc. The embodiments of the present disclosure will not be limited thereto.

Additionally, an image of person included in the similar image may have a relatively high similarity with the image of person included in the target image.

In an embodiment, when the server acquires the similar image of the target image from the plurality of images stored in the library, the server may determine, for each image within the plurality of images, a person similarity between the image and the target image. If the person similarity is larger than or equal to a predefined similarity, the image may be determined as the similar image of the target image. In an alternative embodiment, the server may determine, for each image within the plurality of images, a person similarity between the image and the target image; select an image that has a person similarity (between it and the target image) larger than or equal to a predefined similarity. Accordingly, when a number of the selected images is larger than a predefined number, those selected images will be ranked in order of their person similarities. Then, the predefined number of images that have largest similarities will be chosen from the selected images and determined as similar images of the target image. Alternatively, when the number of the selected images is smaller than or equal to the predefined number, the selected images will be determined as similar images of the target image.

It is to be noted that, the person similarity between the image and the target image may be a similarity between an image of person included in the image and the image of person included in the target image.

Additionally, the predefined similarity may be defined in advance, for example, as 0.8, 0.9, etc. The embodiments of the present disclosure will not be limited thereto.

Moreover, the predefined number may also be defined in advance, for example, as 4, 5, etc. The embodiments of the present disclosure will not be limited thereto.

In an exemplary embodiment, the predefined similarity may be 0.8. For a certain image within the plurality of images, it is assumed that the person similarity between the image and the target image is 0.85. Since 0.85 is larger than 0.8, the server then determines the image as the similar image of the target image.

In another exemplary embodiment, the predefined similarity may be 0.8, the predefined number may be set as 4, and the plurality of images may be called as Image 1, Image 2, Image 3, Image 4, Image 5, Image 6, Image 7 and Image 8. It is assumed that the server has determined that the person similarities between these images 1-8 and the target image respectively are 0.85, 0.82, 0.75, 0.8, 0.81, 0.83, 0.7, and 0.6, then the server may select an image that has a person similarity (between it and the target image) larger than or equal to the predefined similarity of 0.8. Accordingly, the selected images are Image 1, Image 2, Image 4, Image 5 and Image 6, and the total number of the selected images is 5, which is larger than the predefined number of 4. Therefore, the server may choose 4 images that have largest similarities from the selected images ranked in order of their person similarities. As a result, the acquired images are Image 1, Image 6, Image 2, and Image 5. Accordingly, the server may determine Image 1, Image 6, Image 2, and Image 5 as the similar images of the target image.

Generally, the operations performed by the server for determining the person similarity between an image and the target image may be implemented through two approaches.

First approach: the server determines a face similarity between the image and the target image and determines the face similarity as the person similarity.

As the facial feature is one of main identifiable features of the image of person, the server may only determine the face similarity between the image and the target image when determining the person similarity between the image and the target image, and then determine the face similarity as the person similarity, so as to improve the efficiency of determining the person similarity. For example, the server may determine the face similarity between the image and the target image as 0.85, and then the server may determine the face similarity of 0.85 as the person similarity between the image and the target image.

It is to be noted that the operations about determining a face similarity between the image and the target image by the server may be implemented by reference to relevant techniques. The embodiments of the present disclosure will not illustrate in detail regarding this aspect.

For example, the server may determine the face similarity between the image and the target image as 0.85, and then the server may determine the face similarity of 0.85 as the person similarity between the image and the target image.

Second approach: the server determines at least one similarity based on the image and the target image, wherein the at least one similarity includes a face similarity, a posture similarity, and a clothing similarity; and takes a weighted average for the at least one similarity based on a weight of each similarity within the at least one similarity, so as to obtain the person similarity between the image and the target image.

The image of person may include not only a facial feature, but also a posture feature, a clothing feature, and etc. Therefore, those features may be combined together to determine the person similarity between the image and the target image. That is to say, the person similarity between the image and the target image can be determined based on various features such as a face similarity, a posture similarity, and a clothing similarity, etc, in order to improve accuracy of determining the person similarity.

Sometimes, the similarity may be determined by one or more user defined criteria. For example, a user interface may be provided for the user to enter the one or more criteria, and the user may enter the same hair color, and as such, the images in the library that have the same hair color are identified and may be determined to be the similar images as the target image obtained. In this case, the identified similar images may be many images that satisfy the criteria entered by the user and the recommended contact information may be contact information for multiple persons in the multiple identified similar images. The criteria may also be pre-defined and may be stored in the server or in the terminal. Also, the criteria may be merely a subset of the facial features, such as the eyes, or the combination of eyes and the nose.

Sometimes, additional characteristics may be added to identify the similar images besides facial features. Such additional characteristics may include a frequently used language for the person in the obtained target image. For example, the frequently used language for person in the target image may be obtained and received in addition to the image for the person, the server or terminal may search the library for the person with similar facial features and similar frequently used language. The person in the identified image from the library may not only have similar facial features but also have the frequently used language as the person in the target image. Those additional characteristics for the person such as the frequently used language may also be used as one or more standalone criteria for identifying contact information for the person or persons that are similar as the person in the target image received. The present disclosure does not elaborate in detail on this regard.

It is to be noted that the operations about determining at least one similarity based on the image and the target image by the server may be implemented by reference to relevant techniques. The embodiments of the present disclosure will not illustrate in detail regarding this aspect.

Besides, for each similarity within the at least one similarity, the corresponding weight value may be defined depending on its importance value on determining the person similarity between the image and the target image and may be defined in advance. The embodiments of the present disclosure will not be limited thereto.

For example, the at least one similarity may include a face similarity, a posture similarity, and a clothing similarity, and their weight values may be 0.7, 0.2, and 0.1 respectively. It is assumed that based on the image and the target image, the server determines the face similarity as 0.8, the posture similarity as 0.7, and the clothing similarity as 0.6, then the server may take a weighted average for the at least one similarity according to the following equation: 0.8 × 0.7+0.7 × 0.2+0.6 × 0.1 = 0.76. Accordingly, the person similarity between the image and the target image may be obtained as 0.76.

In a further embodiment, before the server acquires a similar image of the target image from a plurality of images stored in a library, the server may also decide whether an image has corresponding contact information, upon receipt of the image; and stores the image and the contact information corresponding to the image into the library, in case that the image has corresponding contact information.

It is to be noted that the library is used to store images having corresponding contact information. Thus, when an image has corresponding contact information, the image meets the requirement for storage in the library. At this time, the server may store the image and the contact information corresponding to the image into the library, in order that it is available to subsequently acquire similar image of the target image from images stored in the library.

In another embodiment, after deciding whether an image has corresponding contact information, for each of a plurality of contact images, the server may match the image with each contact image, in case that the image does not have corresponding contact information, wherein the plurality of contact images are contact images in a stored address book; determines contact information corresponding to an contact image as the contact information of the image, in case that the image successfully matches the contact image; and stores the image and the contact information corresponding to the image into the library.

All the contact images stored in the address book have corresponding contact information. Therefore, when the image does not have corresponding contact information, the image may be utilized to try to match with the contact images. It there is a successful match, then the contact information corresponding to the matched contact image may be determined as the contact information of the image, such that the image meets the requirement for storage in the library. After that, the server may store the image and the contact information corresponding to the image into the library, in order that it is available to subsequently acquire similar image of the target image from images stored in the library.

For example, the plurality of contact images as stored in the address book may be called as Contact image 1, Contact image 2, Contact image 3 and Contact image 4.When the image does not have corresponding contact information, the server may match the image with each contact image within the plurality of contact images. Suppose that the image is successfully matched with Contact image 1 and the contact information of Contact image 1 is "Telephone Number: 15263984567", the server would determine this contact information as the contact information of the image and store the image and the contact information into the library.

In an embodiment, when matching the image with a contact image, the server may determine a person similarity between the image and the contact image, determine that the image is successfully matched with the contact image when the determined person similarity is larger than or equal to a predefined similarity, and determine that the image fails to be matched with the contact image when the determined person similarity is smaller than the predefined similarity. Of course, in detailed scenarios, the server may match the image with the contact image in another manner. The embodiments of the present disclosure will not be limited thereto.

It is to be noted that the operations about determining by the server a person similarity between the image and a contact image are similar to the operations about determining by the server a person similarity between the image and the similar image as stated in step 403. The embodiments of the present disclosure will not illustrate in detail regarding this aspect.

In step 404, the server transmits the similar image and the contact information corresponding to the similar image to the terminal.

It is to be noted that the server may transmit the similar image and the contact information corresponding to the similar image to the terminal via a wired or wireless network. The embodiments of the present disclosure will not be limited thereto.

In step 405, the terminal may generate a recommendation message based on the similar image and the contact information corresponding to the similar image, upon receipt of the similar image and the contact information transmitted by the server.

It is to be noted that the recommendation message is used to recommend an object that is available to contact for the user, and the recommendation message may include the similar image and the contact information corresponding to the similar image.

Besides, the operations about generating, by the server, a recommendation message based on the similar image and the contact information corresponding to the similar image are similar to operation such as a terminal generating a certain message based on some information in related art. The embodiments of the present disclosure will not illustrate in detail regarding this aspect.

For example, the similar image is Image 1, and the contact information corresponding to the similar image is "Telephone Number: 15263984567". Accordingly, the server may generate a recommendation message as shown in Fig. 4C, based on the similar image and the contact information corresponding to the similar image.

It is to be noted that in the embodiments of the present disclosure, the terminal may acquire a similar image of the target image and contact information corresponding to the similar image from the server, and generate a recommendation message based on the similar image of the target image and the contact information corresponding to the similar image.

Since the target image can be flexibly acquired by the terminal and the similar image is obtained based on the target image, the flexibility of the similar image can be ensured. Meanwhile, the recommendation message is generated based on this similar image, therefore the terminal's flexibility for generating a recommendation message can be improved accordingly. Furthermore, the diversity of the recommended objects can be improved since the recommendation message is used to recommend an object that is available to contact for the user.

Sometimes, it is possible that no similar image can be identified in the library using the target image. When no similar image can be identified, the terminal or the server may generate an alert to be display to the user in a user interface to show a similar image for a received target image can't be successfully identified and/or located. When the alert is displayed in the user interface, and one or more further options may be generated and provided in the user interface to allow the user to identify the contact information for one or more persons that are similar to the person in the target image. The one or more options may include searching additional libraries located in different servers or terminals, manually enter additional contact information. The present disclosure does not elaborate in this regard.

Moreover, the contact information in the embodiments of the present disclosure may include not only an Instant Messaging (IM) account, but also a telephone number and the like. Thereby, it solves a problem existed in related art that the recommendation message only include one single content such as account information, and thus enriches the recommended contents in the recommendation message.

In another embodiment, after generating the recommendation message based on the similar image and the contact information corresponding to the similar image, the terminal may also transmit a contact adding request to the target account when the contact information corresponding to the similar image includes a target account. For instance, the target account is an account belonging to a same account system as a user account that is currently logged on in the terminal.

It is to be noted that the contact adding request is to request an object represented by the target account to be added into the user's contact list.

Moreover, the user account may be acquired through a registration in the server, and the user account may be combined of alphabets, numbers and etc. The embodiments of the present disclosure will not be limited thereto.

Since the target account belongs to a same account system as the user account that is currently logged on in the terminal, i.e., the target account and the user account are both registered within a same server, the terminal may directly transmit the contact adding request to the target account, so as to add the object represented by the target account into the user's contact list without requiring any user intervention. As a result, it saves the user's time and improves the efficiency of adding a contact, since tedious operations for manually adding a contact by the user are avoided.

In the embodiments of the present disclosure, the terminal acquires a target image and transmits the target image to a server; the server acquires a similar image of the target image from a plurality of images stored in a library when it receives the target image; after that, the server transmits the similar image and the contact information corresponding to the similar image to the terminal; and the terminal may generate a recommendation message based on the similar image and the contact information corresponding to the similar image, upon receipt of the similar image and the contact information transmitted by the server. Since the target image can be flexibly acquired by the terminal and the similar image is obtained based on the target image, the flexibility of the similar image can be ensured. Meanwhile, the recommendation message is generated based on this similar image, therefore the terminal's flexibility for generating a recommendation message can be improved accordingly. Furthermore, the diversity of the recommended objects can be improved since the recommendation message is used to recommend an object that is available to contact for the user. Moreover, the contact information in the embodiments of the present disclosure may include not only an Instant Messaging (IM) account, but also a telephone number and the like. Thereby, it solves a problem existed in related art that the recommendation message only include one single content such as account information, and thus enriches the recommended contents in the recommendation message.

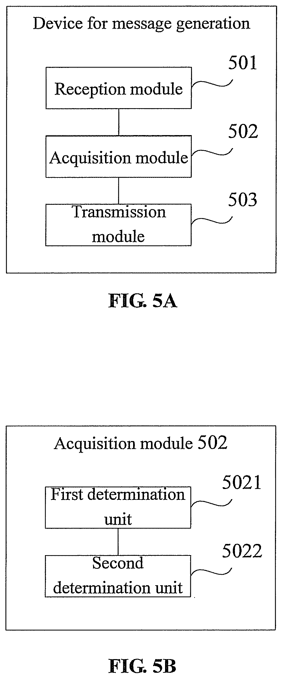

Fig. 5A is a block diagram of a device for message generation according to an exemplary embodiment. As can be seen from Fig. 5A, the device may include a reception module 501, an acquisition module 502, and a transmission module 503.

The reception module 501 is configured to receive a target image transmitted from a terminal, the target image including an image of person.

The acquisition module 502 is configured to acquire a similar image of the target image from a plurality of images stored in a library, and the plurality of images are images having corresponding contact information.

The transmission module 503 is configured to transmit the similar image and the contact information corresponding to the similar image to the terminal, such that the terminal is enabled to a recommendation message based on the similar image and the contact information.

Alternatively or additionally, by reference to Fig. 5B, the acquisition module 502 may include a first determination unit 5021 and a second determination unit 5022.

The first determination unit 5021 is configured to, for each image within the plurality of images, determine a person similarity between the image and the target image.

The second determination unit 5022 is configured to determine, for each image within the plurality of images, the image as the similar image of the target image, in case that the person similarity is larger than or equal to a predefined similarity.

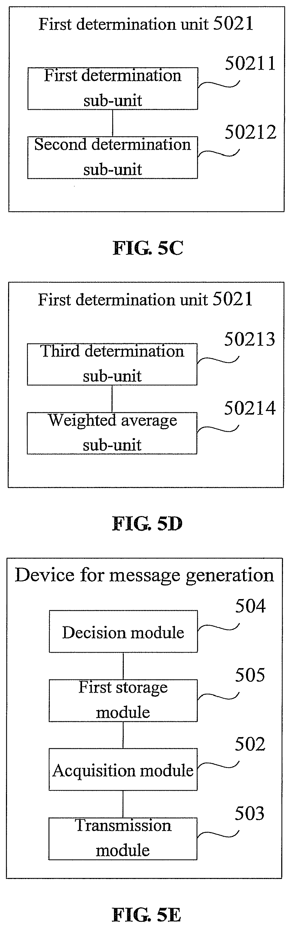

Alternatively or additionally, by reference to Fig. 5C, the first determination unit 5021 may include a first determination sub-unit 50211 and a second determination sub-unit 50212.

The first determination sub-unit 50211 is configured to, for each image within the plurality of images, determine a face similarity between the image and the target image.

The second determination sub-unit 50212 is configured to determine the face similarity as the person similarity.

Alternatively or additionally, by reference to Fig. 5D, the first determination unit 5021 may include a third determination sub-unit 50213 and a weighted average sub-unit 50214.

The third determination sub-unit 50213 is configured to, for each image within the plurality of images, determine at least one similarity based on the image and the target image. In an embodiment, the at least one similarity includes a face similarity, a posture similarity, and a clothing similarity.

The weighted average sub-unit 50214 is configured to take a weighted average for the at least one similarity based on a weight of each similarity within the at least one similarity, so as to obtain the person similarity between the image and the target image.

Alternatively or additionally, by reference to Fig. 5E, the device may also include a decision module 504 and a first storage module 505.

The decision module 504 is configured to decide whether an image has corresponding contact information, upon receipt of the image.

The first storage module 505 is configured to store the image and the contact information corresponding to the image into the library, in case that the image has corresponding contact information.

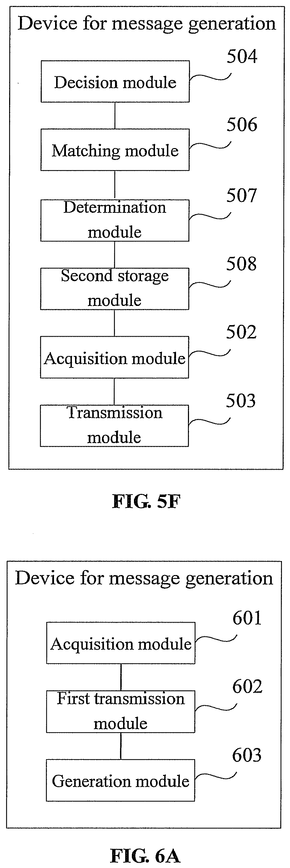

Alternatively or additionally, by reference to Fig. 5F, the device may also include a matching module 506, a determination module 507 and a second storage module 508.

The matching module 506 is configured to, for each of a plurality of contact images, match the image with each contact image, in case that the image does not have corresponding contact information, wherein the plurality of contact images are contact images in a stored address book.

The determination module 507 is configured to determine contact information corresponding to a contact image as the contact information of the image, in case that the image successfully matches the contact image.

The second storage module 508 is configured to store the image and the contact information corresponding to the image into the library

In the embodiments of the present disclosure, a server receives a target image transmitted from a terminal and acquires a similar image of the target image from a plurality of images stored in a library. After that, the server transmitting the similar image and the contact information corresponding to the similar image to the terminal, such that the terminal is enabled to a recommendation message based on the similar image and the contact information. Since the target image can be flexibly acquired by the terminal and the similar image is obtained based on the target image, the flexibility of the similar image can be ensured. Meanwhile, the recommendation message is generated based on this similar image, therefore the terminal's flexibility for generating a recommendation message can be improved accordingly.

The detailed approaches for performing operations by each module within the device discussed in the above embodiments have been illustrated in the embodiments of relevant method. The embodiments of the present disclosure will not illustrate in detail regarding this aspect.

Fig. 6A is a block diagram of a device for message generation according to an exemplary embodiment. As can be seen from Fig. 6A, the device includes an acquisition module 601, a first transmission module 602 and a generation module 603.

The acquisition module 601 is configured to acquire a target image that includes an image of person

The first transmission module 602 is configured to transmit the target image to a server, such that the server is enabled to return a similar image of the target image and contact information corresponding to the similar image based on the target image.

The generation module 603 is configured to generate a recommendation message based on the similar image of the target image and the contact information corresponding to the similar image, upon receipt of the similar image and the contact information transmitted by the server.

Alternatively or additionally, the acquisition module 601 may include a first screen-capturing unit.

The first screen-capturing unit may be configured to screen-capture a region within a shot frame where the image of person is located, upon detection of the image of person within the shot frame during a shooting process, so as to obtain the target image.

Alternatively or additionally, the acquisition module 601 may include a second screen-capturing unit.

The second screen-capturing unit may be configured to screen-capture a region within a shot frame where the image of person is located, upon detection of the image of person within the shot frame and detection of a selection instruction for the image of person during a shooting process, so as to obtain the target image.

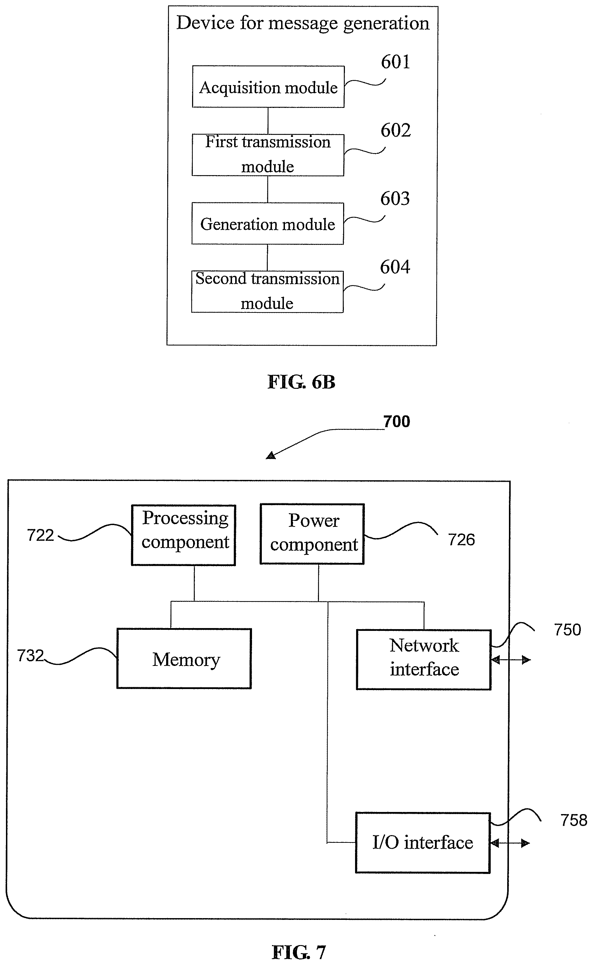

Alternatively or additionally, by reference to Fig. 6B, the device may further include a second transmission module 604.

The second transmission module 604 is configured to, in case that the contact information corresponding to the similar image includes a target account, transmitting a contact adding request to the target account. For example, the target account is an account belonging to a same account system as a user account that is currently logged on in the terminal.

In the embodiments of the present disclosure, a terminal acquires a target image and transmits the target image to a server, such that the server is enabled to return a similar image of the target image and contact information corresponding to the similar image based on the target image. Upon receipt of the similar image and the contact information transmitted by the server, the terminal may generate a recommendation message based on the similar image of the target image and the contact information corresponding to the similar image. Since the target image can be flexibly acquired by the terminal and the similar image is obtained based on the target image, the flexibility of the similar image can be ensured. Meanwhile, the recommendation message is generated based on this similar image. Therefore the terminal's flexibility for generating a recommendation message can be improved accordingly.

Fig. 7 is a block diagram of a device 700 for message generation according to an exemplary embodiment. For example, the device 700 may be a server. As can be seen from Fig. 7, the device 700 may include a processing component 722 (may further include one or more processors), and a memory 732 representative of memory resources, for storing instructions executable by the processing component 722 (e.g., an application program). Application programs stored in the memory 732 may include one or more modules, each of which corresponds to a set of instructions.

The device 700 may also include a power component 726 configured to perform power supply management of the device 700, a wired or wireless network interfaces 750 configured to connect the device 700 to the network, and an input/output interfaces 758. The device 700 may operate operating systems (such as Windows Server™, Mac OS X™, Unix™, Linux™, FreeBSD™, or the like) stored in the memory 732.

Further, the processing component 722 may be configured to execute the sets of instructions to perform a message generation method, and the method may include: receiving a target image transmitted from a terminal, the target image including an image of person; acquiring a similar image of the target image from a plurality of images stored in a library, wherein the plurality of images are images having corresponding contact information; transmitting the similar image and the contact information corresponding to the similar image to the terminal, such that the terminal is enabled to a recommendation message based on the similar image and the contact information.

Alternatively or additionally, the acquiring step may further include: for each image within the plurality of images, determining a person similarity between the image and the target image, and determining the image as the similar image of the target image, in case that the person similarity is larger than or equal to a predefined similarity.

Alternatively or additionally, the step of determining a person similarity between the image and the target image may include: determining a face similarity between the image and the target image; and determining the face similarity as the person similarity.

Alternatively or additionally, the step of determining a person similarity between the image and the target image may include: determining at least one similarity based on the image and the target image, wherein the at least one similarity includes a face similarity, a posture similarity, and a clothing similarity; and taking a weighted average for the at least one similarity based on a weight of each similarity within the at least one similarity, so as to obtain the person similarity between the image and the target image.

Alternatively or additionally, before acquiring a similar image of the target image from a plurality of images stored in a library, the method may further include: deciding whether an image has corresponding contact information, upon receipt of the image; and storing the image and the contact information corresponding to the image into the library, in case that the image has corresponding contact information.

Alternatively or additionally, after deciding whether an image has corresponding contact information upon receipt of the image, the method may further include: for each of a plurality of contact images, matching the image with each contact image, in case that the image does not have corresponding contact information, wherein the plurality of contact images are contact images in a stored address book; determining contact information corresponding to an contact image as the contact information of the image, in case that the image successfully matches the contact image; and storing the image and the contact information corresponding to the image into the library.

In the embodiments of the present disclosure, a server receives a target image transmitted from a terminal and acquires a similar image of the target image from a plurality of images stored in a library. After that, the server transmitting the similar image and the contact information corresponding to the similar image to the terminal, such that the terminal is enabled to a recommendation message based on the similar image and the contact information. Since the target image can be flexibly acquired by the terminal and the similar image is obtained based on the target image, the flexibility of the similar image can be ensured. Meanwhile, the recommendation message is generated based on this similar image, therefore the terminal's flexibility for generating a recommendation message can be improved accordingly.

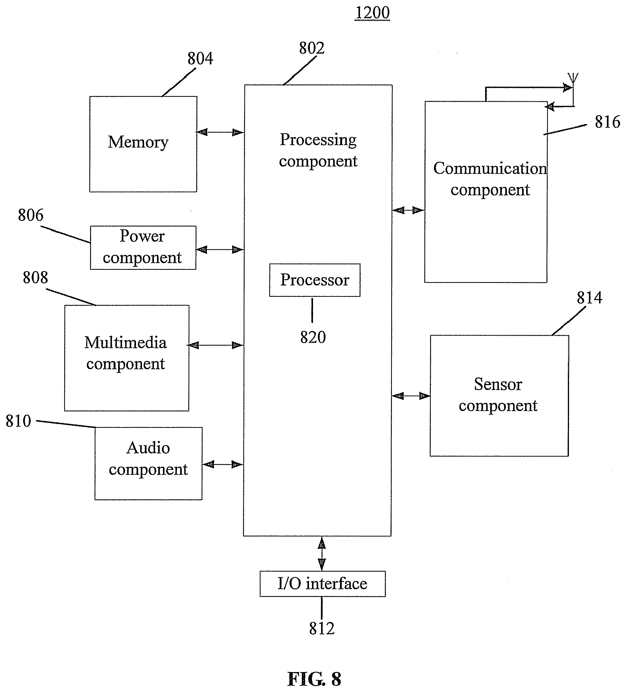

Fig. 8 is a block diagram of a device 800 for message generation according to an exemplary embodiment. For example, the device 800 may be a mobile phone, a computer, a digital broadcast terminal, a messaging device, a gaming console, a tablet, a medical device, exercise equipment, a personal digital assistant, and the like.

Referring to Fig. 8, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the terminal device 800, for performing the above-described methods. For example, the non-transitory computer-readable storage medium may be a ROM, a RAM, a CD-ROM, a magnetic tape, a floppy disc, an optical data storage device, and the like.

There is provided a non-transitory computer-readable storage medium including instructions that, when executed by a processor of a mobile terminal, cause the mobile terminal to perform a method for message generation, the method including: acquiring a target image that includes an image of person; transmitting the target image to a server, such that the server is enabled to return a similar image of the target image and contact information corresponding to the similar image based on the target image; and generating a recommendation message based on the similar image and the contact information corresponding to the similar image, upon receipt of the similar image and the contact information transmitted by the server.

Alternatively or additionally, the step of acquiring the target image may include: screen-capturing a region within a shot frame where the image of person is located, upon detection of the image of person within the shot frame during a shooting process, so as to obtain the target image.

In an alternative embodiment, the step of acquiring the target image may include: screen-capturing a region within a shot frame where the image of person is located, upon detection of the image of person within the shot frame and detection of a selection instruction for the image of person during a shooting process, so as to obtain the target image.

Alternatively or additionally, after the step of generating a recommendation message based on the similar image and the contact information corresponding to the similar image, the method may further include: in case that the contact information corresponding to the similar image includes a target account, transmitting a contact adding request to the target account, wherein the target account is an account belonging to a same account system as a user account that is currently logged on in the terminal.

In this embodiment of the present disclosure, a terminal acquires a target image and transmits the target image to a server, such that the server is enabled to return a similar image of the target image and contact information corresponding to the similar image based on the target image. Upon receipt of the similar image and the contact information transmitted by the server, the terminal may generate a recommendation message based on the similar image of the target image and the contact information corresponding to the similar image. Since the target image can be flexibly acquired by the terminal and the similar image is obtained based on the target image, the flexibility of the similar image can be ensured. Meanwhile, the recommendation message is generated based on this similar image. Therefore the terminal's flexibility for generating a recommendation message can be improved accordingly.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. The specification and embodiments are merely considered to be exemplary and the substantive scope of the disclosure is limited only by the appended claims.

It will be appreciated that the inventive concept is not limited to the exact construction that has been described above and illustrated in the accompanying drawings, and that various modifications and changes can be made without departing from the scope thereof. It is intended that the scope of the invention only be limited by the appended claims.

## Claims

1. A method for image processing, **characterized in** comprising:
receiving (201) a target image transmitted from a terminal, wherein the target image includes an image of a person;
acquiring (202) one or more similar image of the target image from a plurality of images stored in a library, wherein the plurality of images are images having corresponding contact information; and
transmitting (203) the one or more similar images and the contact information corresponding to the one or more similar images to the terminal, such that the terminal is enabled to store, display and/or process further the one or more similar images and the contact information.

2. The method of claim 1, wherein the acquiring (202) comprises: for each image within the plurality of images,
determining a person similarity between the image and the target image; and
determining the image as the similar image of the target image, in case that the person similarity is larger than or equal to a predefined similarity.

3. The method of claim 2, wherein the determining a person similarity between the image and the target image comprises:
determining a face similarity between the image and the target image; and
determining the face similarity as the person similarity.

4. The method of claim 2, wherein the determining a person similarity between the image and the target image comprises:
determining at least one similarity based on the image and the target image, wherein the at least one similarity includes a face similarity, a posture similarity, and a clothing similarity; and
taking a weighted average for the at least one similarity based on a weight of each similarity within the at least one similarity, so as to obtain the person similarity between the image and the target image.

5. The method of any of claims 1 to 4, wherein, before acquiring (202) a similar image of the target image from a plurality of images stored in a library, the method further comprises:
deciding whether an image has corresponding contact information, upon receipt of the image; and
storing the image and the contact information corresponding to the image into the library, in case that the image has corresponding contact information.

6. The method of claim 5, wherein, after deciding whether an image has corresponding contact information upon receipt of the image, the method further comprises:
matching, for each of a plurality of contact images, the image with each contact image, in case that the image does not have corresponding contact information, wherein the plurality of contact images are contact images in a stored address book ;
determining contact information corresponding to an contact image as the contact information of the image, in case that the image successfully matches the contact image; and
storing the image and the contact information corresponding to the image into the library.

7. A method for image processing, which is performed by a terminal, **characterized in** comprising:
acquiring (301) a target image that includes an image of a person;
transmitting (302) the target image to a server, such that the server is enabled to return one or more similar images of the target image and contact information corresponding to the one or more similar images based on the target image; and
storing, displaying and/or processing further the one or more similar images of the target image and the contact information corresponding to the one or more similar images, upon receipt of the one or more similar images and the contact information transmitted by the server.

8. The method of claim 7, wherein the acquiring (301) comprises:
screen-capturing a region within a shot frame where the image of person is located, upon detection of the image of person within the shot frame during a shooting process, so as to obtain the target image.

9. The method of claim 7, wherein the acquiring (301) comprises:
screen-capturing a region within a shot frame where the image of person is located, upon detection of the image of person within the shot frame and detection of a selection instruction for the image of person during a shooting process, so as to obtain the target image.

10. The method of any of claims 7 to 9, wherein, after generating (303) a recommendation message based on the similar image of the target image and the contact information corresponding to the similar image, the method further comprises:
in case that the contact information corresponding to the similar image includes a target account, transmitting a contact adding request to the target account, wherein the target account is an account belonging to a same account system as a user account that is currently logged on in the terminal.

11. A device for image processing, **characterized in** comprising:
a reception module configured to receive a target image transmitted from a terminal, wherein the target image includes an image of a person;
an acquisition module configured to acquire one or more similar images of the target image from a plurality of images stored in a library, wherein the plurality of images are images having corresponding contact information; and
a transmission module configured to transmit the one or more similar images and the contact information corresponding to the one or more similar images to the terminal, such that the terminal is enabled to store, display and/or process further the one or more similar images and the contact information.

12. A device for image processing, wherein the device can be a terminal, **characterized in** comprising:
an acquisition module configured to acquire a target image that includes an image of a person;
a first transmission module configured to transmit the target image to a server, such that the server is enabled to return one or more similar images of the target image and contact information corresponding to the one or more similar images based on the target image; and
a generation module configured to store, display and/or process further the one or more similar images of the target image and the contact information corresponding to the one or more similar images, upon receipt of the one or more similar images and the contact information transmitted by the server.

13. A device for image processing, **characterized in** comprising:
a processor (722, 726, or 820); and
a memory (732 or 804) for storing instructions executable by the processor,
wherein the processor (722, 726, or 820) is configured to:
receive (201) a target image transmitted from a terminal, wherein the target image includes an image of a person;
acquire (202) one or more similar images of the target image from a plurality of images stored in a library, wherein the plurality of images are images having corresponding contact information; and
transmit (203) the one or more similar images and the contact information corresponding to the one or more similar images to the terminal, such that the terminal is enabled to store, display and/or process further the one or more similar images and the contact information.

14. A device for image processing, **characterized in** comprising:
a processor (722, 726, or 820); and
a memory (732 or 804) for storing instructions executable by the processor,
wherein the processor (722, 726, or 820) is configured to:
acquire (301) a target image that includes an image of a person;
transmit (302) the target image to a server, such that the server is enabled to return one or more similar images of the target image and contact information corresponding to the one or more similar images based on the target image; and
store, display and/or process further the one or more similar images of the target image and the contact information corresponding to the one or more similar images, upon receipt of the one or more similar images and the contact information transmitted by the server.
